# FASCICULE DE BREVET EUROPEEN

(11) **EP 2 332 232 B1**
(45) Date de publication et mention de la délivrance du brevet: **27.06.2012**
(21) Numéro de dépôt: 09811110.7
(22) Date de dépôt: 31.08.2009
(51) Int. Cl.: H02K 1/16, H02K 1/18, H02K 1/20

(54) **STATOR POUR MACHINE ÉLECTRIQUE TOURNANTE ET SON PROCÉDÉ DE FABRICATION**
STATOR FÜR EINE ELEKTRISCHE ROTATIONSMASCHINE UND HERSTELLUNGSVERFAHREN DAFÜR
STATOR FOR ROTARY ELECTRIC MACHINE AND METHOD FOR MAKING SAME

(30) Priorité: 03.09.2008 FR 0855896
(43) Date de publication de la demande: 15.06.2011
(73) Titulaire: Société de Technologie MICHELIN, 63000 Clermont-Ferrand (FR); MICHELIN Recherche et Technique S.A., 1763 Granges-Paccot (CH)
(72) Inventeur: VEDY, Bertrand, CH-1814 La Tour de Peilz (CH)
(74) Mandataire: Lasson, Cédric Y. M.
(86) Numéro de dépôt international: PCT/EP2009/061216
(87) Numéro de publication internationale: WO 2010/026126

(56) Documents cités:
- EP-A- 1 174 988
- WO-A-02/29958
- FR-A- 1 314 822
- GB-A- 2 059 177

## Description

La présente invention se rapporte aux machines électriques tournantes, et plus particulièrement au stator extérieur des machines électriques dont le rotor est placé à l'intérieur du stator.

Le stator comporte principalement un circuit magnétique et des bobinages de fils conducteurs de l'électricité. Le circuit magnétique quant à lui est toujours feuilleté ; il est constitué par un empilage de tôles magnétiques. Chaque tôle est découpée de façon à aménager des encoches séparées par des dents, les encoches étant le logement des fils conducteurs électriques, réalisés en général en fil de cuivre isolé, souvent de section ronde. Chaque encoche est limitée par deux parois orientées sensiblement radialement et par un fond d'encoche et comporte une ouverture. Ce principe d'agencement du stator est largement appliqué pour les machines synchrones ou asynchrones.

La demande de brevet EP 1174988 décrit des machines électriques dont le circuit magnétique statorique est réalisé en deux parties : une partie intérieure comprenant les encoches et une partie extérieure qui enveloppe les encoches. Le circuit magnétique est feuilleté et il est fabriqué à partir de tôles ferromagnétiques pour des raisons bien connues de l'homme du métier. Dans ce type de circuit magnétique, chaque dent séparant deux encoches ne forme pas une pièce continue avec la partie extérieure du circuit magnétique. Grâce à cet agencement, on peut former un noyau comportant la partie intérieure du circuit magnétique, sur lequel on peut bobiner les fils conducteurs dans les encoches en ayant accès aux encoches par l'extérieur. Ensuite, on recouvre la partie intérieure par la partie extérieure pour terminer le circuit magnétique. Ce circuit magnétique en deux parties est solidaire d'un fourreau qui l'enveloppe et le maintien mécaniquement. Le fourreau peut en outre avoir pour fonction de contenir un fluide de refroidissement. Dans le document de brevet EP 1174988, on décrit également un procédé d'assemblage du stator consistant à fixer d'abord la partie extérieure du stator dans le fourreau puis à placer la partie intérieure dans la partie extérieure avant de coller l'ensemble par l'intermédiaire d'une résine.

Une difficulté dans l'obtention de ce type de circuits magnétiques en deux parties concerne l'assemblage et le maintien des tôles de la partie extérieure. En effet, l'assemblage décrit dans le document EP 1174988 est relativement complexe à réaliser, ce qui pénalise son utilisation en grande série industrielle.

Un objectif de l'invention est donc de proposer une machine électrique améliorée, notamment en ce qui concerne l'assemblage du circuit magnétique du stator.

Pour cela l'invention propose un stator extérieur pour machine électrique tournante, le stator comprenant un fourreau sensiblement cylindrique et un circuit magnétique feuilleté, ledit circuit magnétique comportant :
- un premier empilage de tôles de culasse disposées perpendiculairement à l'axe du stator, le premier empilage formant une enveloppe extérieure du circuit magnétique ;
- un deuxième empilage de tôles en étoile disposées perpendiculairement à l'axe à l'intérieur de ladite enveloppe extérieure, les tôles en étoile étant rendues solidaires de ladite enveloppe extérieure ;
dans lequel l'empilage de tôles de culasse est maintenu dans le fourreau entre une première butée axiale solidaire du fourreau et une rondelle de serrage, le stator étant caractérisé en ce que la rondelle de serrage est frettée dans le fourreau, en appui contre une deuxième butée axiale du fourreau.

De préférence, la rondelle de serrage est en un matériau amagnétique et diélectrique, de préférence en matériau synthétique.

De préférence, le matériau synthétique est du PEEK.

De préférence, une rondelle d'appui est intercalée entre la première butée et l'empilage de tôles de culasse.

De préférence, la rondelle d'appui est en matériau synthétique, de préférence encore, identique au matériau de la rondelle de serrage.

De préférence, les tôles de culasse comportent au moins un ergot périphérique coopérant avec au moins une rainure longitudinale du fourreau pour immobiliser les tôles en rotation par rapport au fourreau.

De préférence, les tôles de culasse comportent au moins deux ergots périphériques diamétralement opposés l'un à l'autre et coopérant avec au moins deux rainures longitudinales du fourreau.

L'invention concerne également une machine électrique tournante comprenant un tel stator.

L'invention concerne en outre un procédé de fabrication d'un tel stator, ledit procédé comprenant les étapes consistant successivement à :
- découper une pluralité de tôles de culasse,
- empiler les tôles de culasse dans le fourreau en appui contre une première butée axiale solidaire du fourreau,
- serrer axialement l'empilage et,
- immobiliser l'empilage par l'intermédiaire d'une rondelle de serrage frettée contre une deuxième butée axiale solidaire du fourreau.

De préférence, on empile les tôles de culasse tête-bêche.

L'invention sera mieux comprise grâce à la suite de la description, qui s'appuie sur les figures suivantes :
- la figure 1 est une vue en coupe le long de l'axe de rotation d'une machine électrique selon l'invention (selon la ligne A-A visible à la figure 2),
- la figure 2 est une vue en coupe du stator dans un plan perpendiculaire à l'axe (selon la ligne B-B visible à la figure 1),
- la figure 3 est une vue similaire à la figure 1 montrant une partie du stator selon l'invention,
- la figure 4 est une vue schématique en coupe le long de l'axe montrant à plus grande échelle le détail de l'assemblage du circuit magnétique statorique selon l'invention.

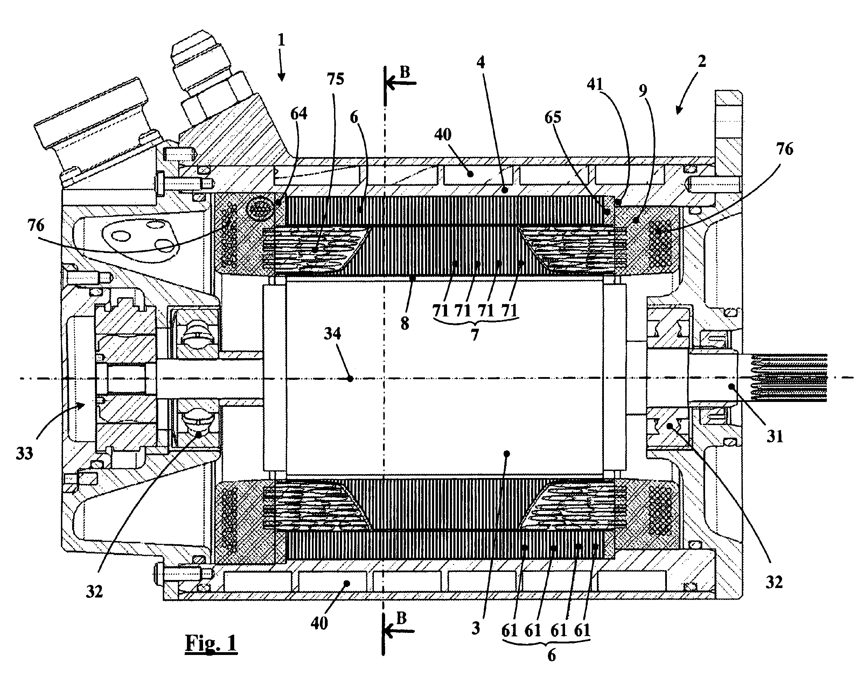

A la figure 1, on voit une machine électrique 1 comprenant un stator extérieur 2 et un rotor intérieur 3 séparés par un entrefer 8 de très faible épaisseur, la figure étant une coupe dans un plan contenant l'axe de rotation 34 de la machine. Le rotor 3 comporte un arbre 31 monté par deux paliers 32 à l'intérieur du rotor. On voit aussi un codeur/résolveur 33 placé à l'une des extrémités (gauche sur la figure 1) de l'arbre. Pour plus de détails sur un exemple de rotor utilisable dans ce type de machine électrique, le lecteur est invité à consulter par exemple la demande de brevet EP 1 359 657. Ceci n'est cependant qu'un exemple non limitatif de rotor pouvant être associé au stator proposé par la présente invention.

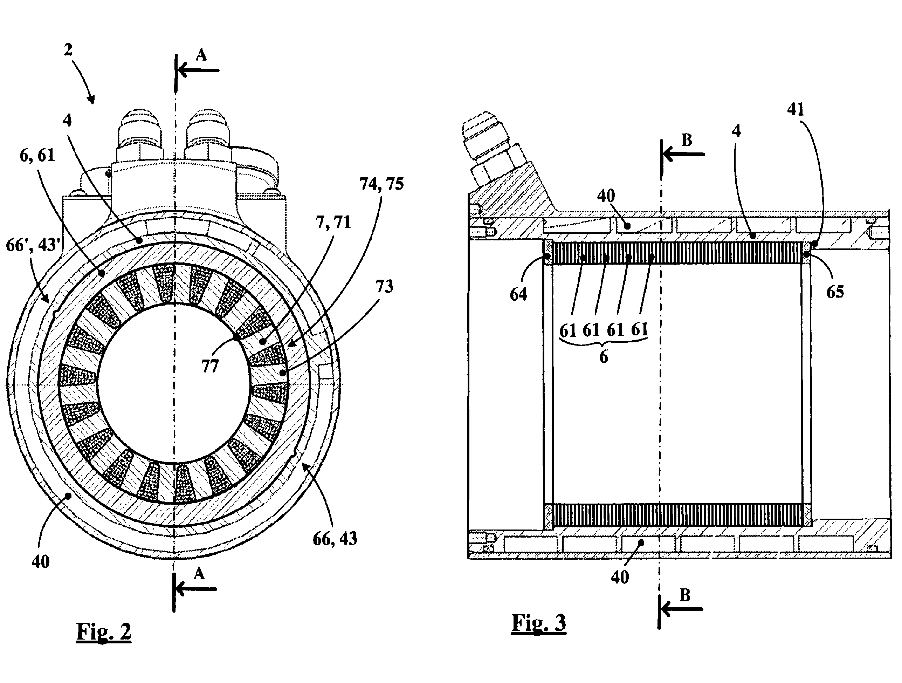

Comme on le voit bien également à la figure 2, le circuit magnétique statorique est constitué de deux parties distinctes. Chacune de ces deux parties est obtenue par empilement d'un grand nombre de tôles découpées dans une tôle magnétique et disposées sensiblement parallèlement à un plan perpendiculaire à l'axe. Les tôles peuvent avoir une épaisseur unitaire très faible, par exemple de l'ordre de quelques dixièmes de millimètre, par exemple 0,2 mm.

Un premier empilage 6 de tôles de culasses 61 constitue l'enveloppe extérieure du circuit magnétique. Un deuxième empilage 7 de tôles en étoile 71 est disposé à l'intérieur de l'enveloppe extérieure. Ce deuxième empilage forme les dents 73 qui délimitent les encoches 74 contenant les fils des bobinages statoriques 75.

Contrairement à la construction communément admise dans laquelle les encoches sont ouvertes radialement vers l'intérieur de la machine, les pieds d'encoche sont ici de préférence fermés par le circuit magnétique sur la totalité de la périphérie intérieure du stator. Une cloison 77 de très faible épaisseur du côté radialement intérieur de l'encoche 74, par exemple inférieure à 0,5 mm, et de préférence inférieure à 0,4 mm, suffit à lui conférer une grande robustesse mécanique du fait que la cloison est continue.

Les fils conducteurs électriques disposés dans les encoches sont noyés dans une résine d'imprégnation 9. A la figure 1, on voit que la même résine enrobe les chignons 76 à chaque extrémité du stator au-delà du circuit magnétique.

Les dents 73 sont ainsi rendues solidaires de l'enveloppe extérieure par collage. Le collage n'est qu'un mode de réalisation avantageux. On peut cependant rendre ces deux parties du circuit magnétique solidaires l'une de l'autre par tout moyen approprié.

L'enveloppe extérieure 6 est montée à l'intérieur d'un fourreau 4 qui l'entoure et le maintien mécaniquement. Un circuit 40 permet de préférence en outre de faire circuler un fluide de refroidissement dans le fourreau (voir aussi figure 1).

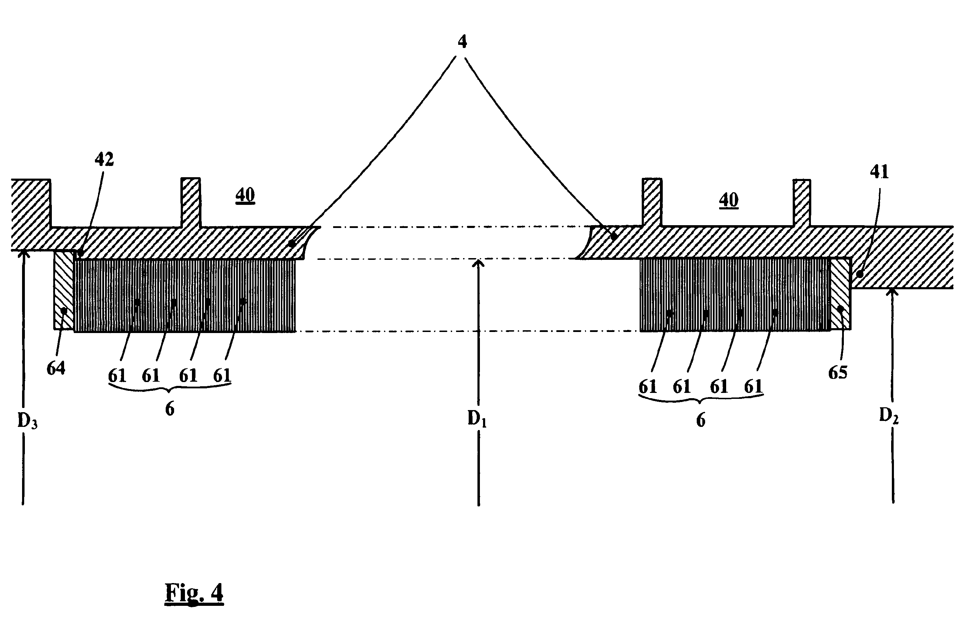

Selon l'invention, l'enveloppe extérieure 6 est montée à l'intérieur du fourreau 4 selon un assemblage particulier qui va être décrit ci-dessous en référence aux figures 3 et 4.

L'empilage 6 des tôles de culasse 61 prend d'une part appui sur une première butée axiale solidaire du fourreau 4, ici un premier épaulement 41 (à droite sur les figures). De préférence, une rondelle d'appui 65 est interposée entre ledit épaulement et la première tôle de l'empilage. A l'autre extrémité de l'empilage, une rondelle de serrage 64 vient maintenir l'empilage en place. Selon l'invention, la rondelle de serrage est frettée dans le fourreau, c'est à dire que son diamètre libre est plus grand que le diamètre intérieur du fourreau (D₃) à cette extrémité.

Par rapport à la fixation à l'aide d'un anneau élastique selon l'état de la technique, la fixation par frettage selon l'invention présente l'avantage de faciliter l'industrialisation du procédé de fabrication et d'assemblage du stator du fait tout d'abord de la suppression d'une opération d'usinage de la gorge et du fait ensuite de la suppression de l'opération délicate consistant à mettre en place l'anneau élastique dans ladite gorge tout en maintenant la pression axiale sur l'empilage de tôles de culasse.

La rondelle de serrage vient en appui contre une deuxième butée axiale, ici un deuxième épaulement 42 du fourreau 4, de manière à définir une cote déterminée pour la longueur du circuit magnétique, indépendamment de l'effort de compression axial appliqué à l'empilage. Le procédé d'assemblage s'en trouve ainsi encore simplifié tout en garantissant une excellence reproductibilité.

Le fourreau présente alors au moins trois diamètres caractéristiques que l'on peut définir de la manière suivante :
- un diamètre central (D₁) dans lequel l'empilage 6 est placé (ainsi que la rondelle d'appui 65 le cas échéant).
- un diamètre d'appui (D₂) plus petit que le diamètre central (D₁) de manière à définir la première butée (ici, le premier épaulement 41).
- un diamètre de frettage (D₃) dans lequel est frettée la rondelle de serrage.

Le diamètre de frettage (D₃) est plus grand que le diamètre central (D₁), ces deux diamètres définissent ensemble la deuxième butée (ici, le deuxième épaulement 42).

Ces trois diamètres doivent donc respecter la relation suivante : D₃ > D₁ > D₂.

De manière connue en soi, la rondelle de serrage 64 doit, pour être frettée, présenter un diamètre libre plus grand que le diamètre de frettage (D₃). On détermine cette différence de diamètre en fonction de l'effort axial prévu en fonctionnement, en tenant compte notamment des tolérances de fabrication de chacun des deux éléments à assembler. En pratique, la différence de diamètre peut être de l'ordre de quelques centièmes de millimètre, par exemple moins de 10 centièmes.

Au moment de l'assemblage, on utilise de préférence la dilatation/rétraction thermique du fourreau 4 et de la rondelle de serrage 64 pour faciliter le pressage de la rondelle vers sa position finale. On aura donc tendance à chauffer le fourreau et/ou refroidir la rondelle de plusieurs dizaines de degrés (°K). De manière également connue en soi, les arêtes des pièces sont de préférence chanfreinées.

Selon un mode de réalisation préféré de l'invention, la rondelle de serrage est réalisée dans un matériau synthétique, amagnétique et bon diélectrique. On choisit de préférence du polyéthercétone, couramment désigné par l'abréviation « PEEK ». Un avantage de ce matériau est qu'il permet de réaliser un frettage dont la résistance à l'arrachement varie peu lors des dilatations thermiques du fourreau, ce dernier étant de préférence réalisé en alliage d'aluminium.

De préférence, les tôles de culasse 61 comporte en outre un premier ergot 66 apte à coopérer avec une première rainure 43 du fourreau pour bloquer toute rotation relative de ces deux éléments.

Avantageusement, un deuxième ergot 66', diamétralement opposé au premier ergo 66, coopère avec une deuxième rainure 43'. De cette façon, les tôles peuvent être empilées tête-bêche, c'est à dire tournées de 180° l'une par rapport à l'autre lors de l'empilement. Cette rotation peut être effectuée autour de l'axe du stator ou autour d'un axe perpendiculaire à l'axe du stator. Ainsi, une éventuelle variation d'épaisseur d'un côté à l'autre des tôles n'a pas d'effet néfaste sur la répartition de la pression axiale qui s'exerce sur l'empilage.

L'invention concerne également un procédé préféré de fabrication d'un tel stator pour machine électrique tournante. Les principales étapes du procédé sont les suivantes :
- découper des tôles de culasse 61 en anneau,
- empiler les tôles de culasse de façon à obtenir une enveloppe extérieure 6,
- bloquer l'empilage des tôles de culasse dans le fourreau par frettage d'une rondelle de serrage 64,
et par ailleurs,
- découper des tôles en étoile 71 comportant une base circulaire 77 et des dents rayonnantes 73 faisant protubérance vers l'extérieur et formant une seule pièce avec la base,
- empiler ces tôles en étoile sur un manchon de façon à superposer les dents et obtenir un noyau ayant entre les dents des encoches 74 ouvertes vers l'extérieur,
- bobiner les fils conducteurs 75 dans les encoches,
ensuite,
- assembler le noyau supportant les bobinages 75 et l'enveloppe extérieure 6 et les rendre solidaires l'un de l'autre, de préférence par l'intermédiaire d'une résine d'imprégnation 9 des conducteurs,
- démonter le manchon,
- usiner le cas échéant les bases de façon à ajuster le diamètre interne du stator.

La phase d'imprégnation des bobinages, bien connue en soi de l'homme du métier, remplit donc ici une fonction supplémentaire : elle rend solidaires les tôles en étoile 71 (et donc les dents 73) et les tôles de culasses 61. De préférence, l'imprégnation assure aussi le collage du circuit magnétique dans le fourreau 4.

Les machines électriques selon l'invention peuvent être utilisées indifféremment comme moteurs électriques ou bien comme alternateurs (générateurs).

## Revendications

1. Stator extérieur (2) pour machine électrique tournante (1), le stator comprenant un fourreau (4) sensiblement cylindrique et un circuit magnétique feuilleté (6,7), ledit circuit magnétique comportant :
• un premier empilage (6) de tôles de culasse (61) disposées perpendiculairement à l'axe (34) du stator, le premier empilage formant une enveloppe extérieure du circuit magnétique ;
• un deuxième empilage (7) de tôles en étoile (71) disposées perpendiculairement à l'axe et à l'intérieur de ladite enveloppe extérieure, les tôles en étoile étant rendues solidaires de ladite enveloppe extérieure ;
dans lequel l'empilage de tôles de culasse est maintenu dans le fourreau entre une première butée axiale (41) solidaire du fourreau et une rondelle de serrage (64), le stator étant **caractérisé en ce que** la rondelle de serrage est frettée dans le fourreau, en appui contre une deuxième butée axiale (42) du fourreau de manière à définir une cote déterminée pour la longueur du circuit magnétique, indépendamment de l'effort de compression axial appliqué à l'empilage.

2. Stator selon l'une des revendications précédentes dans lequel la rondelle de serrage est en un matériau amagnétique et diélectrique.

3. Stator selon la revendication 2 dans lequel la rondelle de serrage est en matériau synthétique.

4. Stator selon la revendication 3 dans lequel le matériau synthétique est du PEEK.

5. Stator selon l'une des revendications précédentes dans lequel une rondelle d'appui (65) est intercalée entre la première butée (41) et l'empilage (6) de tôles de culasse.

6. Stator selon la revendication 5 dans lequel la rondelle d'appui (65) est en matériau synthétique.

7. Stator selon l'une des revendications 5 ou 6 dans lequel le matériau de la rondelle d'appui est identique au matériau de la rondelle de serrage.

8. Stator selon l'une des revendications précédentes dans lequel les tôles de culasse comportent au moins un ergot périphérique (66) coopérant avec au moins une rainure longitudinale (43) du fourreau pour immobiliser les tôles en rotation par rapport au fourreau.

9. Stator selon la revendication 8 dans lequel les tôles de culasse comportent au moins deux ergots périphériques (66, 66') diamétralement opposés l'un à l'autre et coopérant avec au moins deux rainures longitudinales (43, 43') du fourreau.

10. Machine électrique (1) tournante comprenant un stator (2) selon l'une des revendications précédentes.

11. Procédé de fabrication d'un stator selon l'une des revendications 1 à 9 le stator (2) comprenant un fourreau (4) sensiblement cylindrique et un circuit magnétique feuilleté (6,7), ledit circuit magnétique comportant un premier empilage de tôles de culasse disposées perpendiculairement à l'axe du stator, le premier empilage formant une enveloppe extérieure du circuit magnétique,
ledit procédé comprenant les étapes consistant successivement à :
• découper une pluralité de tôles de culasse (61),
• empiler les tôles de culasse dans le fourreau (4) en appui contre une première butée axiale (41) solidaire du fourreau,
• serrer axialement le premier empilage (6) et,
• immobiliser le premier empilage par l'intermédiaire d'une rondelle de serrage (64) frettée contre une deuxième butée axiale (42) solidaire du fourreau de manière à définir une cote déterminée pour la longueur du circuit magnétique, indépendamment de l'effort de compression axial appliqué au premier empilage.

12. Procédé selon la revendication 11 dans lequel on empile les tôles de culasse tête-bêche.

## Claims

1. External stator (2) for electrical rotating machine (1), the stator including a substantially cylindrical sheath (4) and a laminated magnetic circuit (6, 7), said magnetic circuit comprising:
• a first stack (6) of yoke metal sheets (61) arranged perpendicularly to the axis (34) of the stator, the first stack forming an external covering for the magnetic circuit;
• a second stack (7) of star-shaped metal sheets (71) arranged perpendicularly to the axis inside said external covering, the star-shaped sheets being made integral with said external covering;
in which the stack of yoke metal sheets is held in the sheath between a first axial stop (41) integral with the sheath and a clamping washer (64), the stator being **characterized in that** the clamping washer is shrink-fitted into the sheath, supported against a second axial stop (42) of the sheath so as to define a specified dimension for the length of the magnetic circuit, independently of the axial compression force applied to the stack.

2. Stator according to one of the preceding claims in which the clamping washer is made of a non-magnetic, dielectric material.

3. Stator according to Claim 2 in which the clamping washer is made of synthetic material.

4. Stator according to Claim 3 in which the synthetic material is PEEK.

5. Stator according to one of the preceding claims in which a support washer (65) is inserted between the first stop (41) and the stack (6) of yoke metal sheets.

6. Stator according to Claim 5 in which the support washer (65) is made of synthetic material.

7. Stator according to one of Claims 5 or 6 in which the material of the support washer is identical to the material of the clamping washer.

8. Stator according to one of the preceding claims in which the yoke metal sheets have at least one peripheral pin (66) cooperating with at least one longitudinal groove (43) of the sheath for immobilizing the sheets rotating with respect to the sheath.

9. Stator according to Claim 8 in which the yoke metal sheets have at least two peripheral pins (66, 66') diametrically opposite one another cooperating with at least two longitudinal grooves (43, 43') of the sheath.

10. Electrical rotating machine (1) including a stator (2) according to one of the preceding claims.

11. Method of manufacturing a stator according to one of Claims 1 to 9, the stator including a substantially cylindrical sheath and a laminated magnetic circuit, said magnetic circuit comprising a first stack of yoke metal sheets arranged perpendicularly to the axis of the stator, the first stack forming an external covering for the magnetic circuit; said method comprising the stages consisting successively of:
• cutting a plurality of yoke metal sheets (61),
• stacking the yoke metal sheets in the sheath (4) supported against a first axial stop (41) integral with the sheath,
• clamping the first stack (6) axially and,
• immobilizing the first stack through the intermediary of a shrink-fitted clamping washer (64) against a second axial stop (42) integral with the sheath so as to define a specified dimension for the length of the magnetic circuit, independently of the axial compression force applied to the first stack.

12. Method according to Claim 11 in which the yoke metal sheets are stacked head to tail.

## Patentansprüche

1. Externer Stator (2) für drehende elektrische Maschine (1), wobei der Stator eine im Wesentlichen zylindrische Hülse (4) und einen Lamellen-Magnetkreis (6, 7) umfasst, wobei der Magnetkreis seinerseits Folgendes umfasst:
- einen ersten Stapel (6) aus Magnetjochblechen (61), die senkrecht zu der Achse (34) des Stators angeordnet sind, wobei der erste Stapel eine Außenhülle des Magnetkreises bildet;
- einen zweiten Stapel (7) aus sternförmigen Blechen (71), die senkrecht zu der Achse und innerhalb der Außenhülle angeordnet sind, wobei die sternförmigen Bleche mit der Außenhülle fest verbunden sind;
wobei der Stapel aus Magnetjochblechen in der Hülse zwischen einem ersten axialen Anschlag (41), der mit der Hülse fest verbunden ist, und einer Klemmscheibe (64) gehalten wird, wobei der Stator **dadurch gekennzeichnet ist, dass** die Klemmscheibe in der Hülse aufgeschrumpft ist und sich dabei an einem zweiten axialen Anschlag (42) der Hülse abstützt, derart, dass unabhängig von der auf den Stapel ausgeübten axialen Kompressionskraft für die Länge des Magnetkreises ein bestimmtes Maß definiert ist.

2. Stator nach einem der vorhergehenden Ansprüche, wobei die Klemmscheibe aus einem nicht magnetischen und dielektrischen Material ist.

3. Stator nach Anspruch 2, wobei die Klemmscheibe aus einem Kunststoff ist.

4. Stator nach Anspruch 3, wobei der Kunststoff PEEK ist.

5. Stator nach einem der vorhergehenden Ansprüche, wobei die Abstützscheibe (65) zwischen den ersten Anschlag (41) und den Stapel (6) aus Magnetjochblechen eingefügt ist.

6. Stator nach Anspruch 5, wobei die Abstützscheibe (65) aus Kunststoff ist.

7. Stator nach einem der Ansprüche 5 oder 6, wobei das Material der Abstützscheibe gleich dem Material der Klemmscheibe ist.

8. Stator nach einem der vorhergehenden Ansprüche, wobei die Magnetjochbleche wenigstens eine Umfangsnase (66) aufweisen, die mit wenigstens einer longitudinalen Rille (43) der Hülse zusammenwirkt, um die Bleche in Bezug auf die Hülse drehfest zu machen.

9. Stator nach Anspruch 8, wobei die Magnetjochbleche wenigstens zwei Umfangsnasen (66, 66') aufweisen, die einander diametral gegenüberliegen und mit wenigstens zwei longitudinalen Rillen (43, 43') der Hülse zusammenwirken.

10. Drehende elektrische Maschine (1), die einen Stator (2) nach einem der vorhergehenden Ansprüche umfasst.

11. Verfahren zur Herstellung eines Stators nach einem der Ansprüche 1 bis 9, wobei der Stator (2) eine im Wesentlichen zylindrische Hülse und einen Lamellen-Magnetkreis (6, 7) umfasst, wobei der Magnetkreis einen ersten Stapel (6) aus Magnetjochblechen (61) umfasst die senkrecht zu der Achse (34) des Stators angeordnet sind, wobei der erste Stapel eine Außenhülle des Magnetkreises bildet, wobei das Verfahren die Schritte umfasst, die nacheinander darin bestehen:
- mehrere Magnetjochbleche (61) zuzuschneiden,
- die Magnetjochbleche in der Hülse (4) zu stapeln, indem sie an einem ersten axialen Anschlag (41) anliegen, der mit der Hülse fest verbunden ist,
- den ersten Stapel (6) axial festzuklemmen und
- den ersten Stapel über eine Klemmscheibe (64), die auf einen zweiten axialen Anschlag (42), der mit der Hülse fest verbunden ist, aufgeschrumpft ist, unbeweglich zu machen, derart, dass unabhängig von der auf den ersten Stapel ausgeübten axialen Kompressionskraft für die Länge des Magnetkreises ein bestimmtes Maß definiert wird.

12. Verfahren nach Anspruch 11, wobei die Magnetjochbleche zueinander entgegengesetzt gestapelt werden.
